# EUROPEAN PATENT APPLICATION

(11) **EP 4 502 783 A1**
(43) Date of publication of application: **05.02.2025**
(21) Application number: 24184069.3
(22) Date of filing: 24.06.2024
(51) Int. Cl.: G06F 7/483, G06F 15/173

(54) **IN-NETWORK COMPUTE OPERATIONS**

(30) Priority: 04.08.2023 US 202318230605
(71) Applicant: Intel Corporation, Santa Clara, CA 95054 (US)
(72) Inventor: NAEIMI, Helia A., Santa Clara, 95054 (US); FINGERHUT, John Andrew, Santa Clara, 95054 (US)
(74) Representative: Rummler, Felix

(57) **Abstract**

Examples described herein relate to an interface and circuitry coupled to the interface, the circuitry configured to execute instructions that cause the circuitry to perform floating point (FP) operations based on floating point data received in different packets. The order of the floating point operations can be based on a reorder of the data received in the different packets and wherein the reorder of the data received in the different packets is different than the order in which the packets were received.

## Description

### BACKGROUND

Machine Learning (ML) or High performance computing (HPC) clusters utilize multitudes of servers and graphics processing unit (GPUs), Tensor Processing Units (TPUs), or accelerators. Collective operations can be performed on data transmitted through a network by different switches. These systems can train ML models using iterative algorithms such as stochastic gradient descent whereby input data is partitioned across workers and multiple iterations are performed over the training data. At each iteration, workers compute an update to the ML model parameters based on a subset of local data and an intermediate current model. The workers communicate their results to be aggregated into a model update and the aggregate update is summed for model parameters at the nodes for the next iteration. These iterations are performed multiple times (epochs) over an entire dataset.

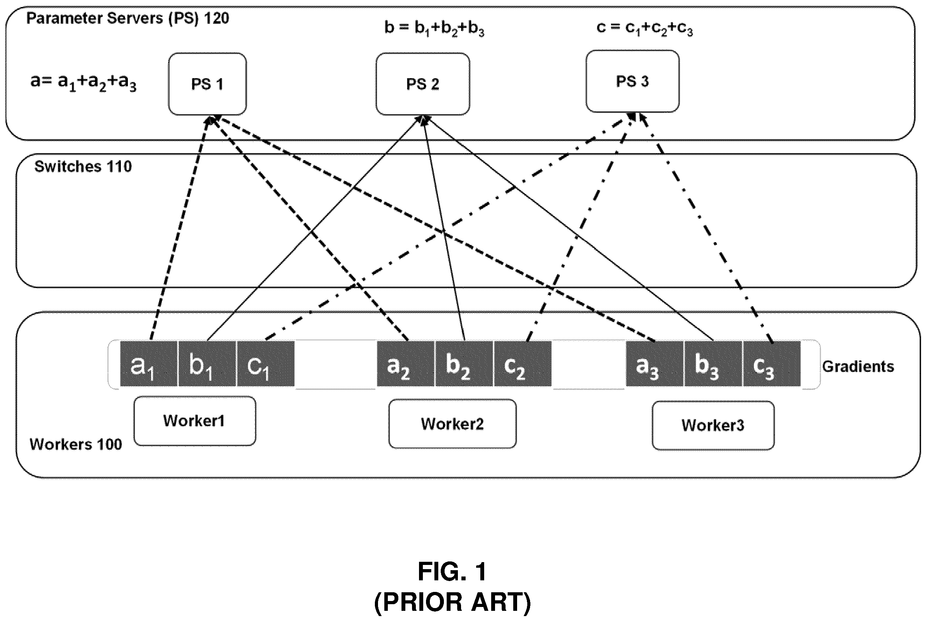

FIG. 1 shows an end-to-end solution for machine learning (ML) training using a PS architecture. A parameter server (PS) can be utilized for collective operations whereby worker nodes compute updates and send updates to the PS. The PS pushes the aggregated data or the data is pulled from PS servers. PS architecture includes workers 100 and parameter servers (PS) 120 that are communicatively coupled using switches 110. An end-to-end solution for PS architecture includes reduce-scatter and Allgather operators. FIG. 1 shows that Worker1 has three queue pairs (QPs), and each QP connects to a PS. Worker2 and Worker3 also utilize three QPs, and each QP connects to a PS.

In the reduce-scatter operator, a worker sends a partition of the data to a corresponding parameter server. For example, partition a1 from Worker1, a2 from Worker2 and a3 from Worker3 are sent to PS1, whereas partition b1 from worker1, b2 from worker2, and b3 from worker3 are sent to PS2. A similar pattern applies to the PS3. As a result, the data are scattered across multiple parameter servers to leverage the parallel computation of graphics processing units (GPUs) located at a parameter server. After receiving the data, the PS first performs aggregation over the data from the workers.

In the Allgather operator, the data that are processed by a GPU are multicast to the workers. A parameter server sends the same copy of the data to the workers. In this process, the bandwidth from one PS is distributed to all the workers, and the network could be the bottleneck.

### BRIEF DESCRIPTION OF THE DRAWINGS

FIG. 1 shows an end-to-end solution for machine learning (ML) training using a parameter server (PS) architecture.
FIG. 2 depicts an example system.
FIGs. 3A and 3B depict example switch circuitries.
FIGs. 4A and 4B depict example collective circuitries.
FIG. 5 depicts an example of packet formats.
FIG. 6 depicts an example of TLS record alignment with RDMA packets.
FIG. 7 depicts an example manner to reorder packets.
FIG. 8 depicts an example accumulation tree for an addition operation.
FIG. 9 depicts an example system.
FIG. 10 depicts an example process.
FIG. 11 depicts an example network interface device or packet processing device.
FIGs. 12A-12C depict example switches.
FIG. 13 depicts an example system.

### DETAILED DESCRIPTION

The PS architecture and other neural network architectures (e.g., convolutional neural network (CNN), recurrent neural network (RNN), transformer-based models, or others) can utilize arithmetic operations involving floating point (FP) format numbers. Institute of Electrical and Electronics Engineers (IEEE) Standard for Floating-Point Arithmetic standard 754 (IEEE 754-2019) defines reproducibility requirements as to a sequence of FP operations because different sequences of FP operations may yield different results. In other words, an accumulation result of a list of FP numerical data depends on the order they are added and are not associative. However, an order of packets arriving at a network interface device from different sources is not predictable and can arrive out of order. Accordingly, FP numerical data can arrive at a network interface device out of order.

Communications among devices in a PS architecture or other neural network architectures can utilize cryptographic protocols to provide security of packets transmitted via a computer network. Secure Sockets Layer (SSL) and Transport Layer Security (TLS) are examples of security protocols. TLS provides end-to-end encryption at the application layer and TLS can secure application-to-application communication. TLS is a widely deployed protocol used for securing transmission control protocol (TCP) connections on the Internet. TLS is defined at least in The Transport Layer Security (TLS) Protocol Version 1.3, RFC 8446 (August 2018).

Another example encryption protocol for secure datagram transport is Datagram Transport Layer Security (DTLS). DTLS is defined at least by Network Working Group Request for Comments (RFC) 4347 (2006) and Internet Engineering Task Force (IETF) Datagram Transport Layer Security (DTLS) protocol Version 1.3 (2020).

Another example encryption protocol for secure datagram transport is PSP Security Protocol (PSP). PSP is a security protocol created by Google^{®} for encryption of packets. PSP uses the concept of a "Security Association" (SA) to represent the set of traffic to be handled with a particular set of crypto state (keys, initialization vectors (IVs), sequence numbers, etc.).

At least to achieve reproducible results for operations on FP data, a network interface device can order FP data so that a sequence of operations on the FP data can be performed to generate a result in a reproducible manner despite the network interface device receiving packets that carry FP data out of order. In some examples, the network interface device can serve as both a transport protocol endpoint and a security protocol endpoint for communications with other devices. For example, the network interface device can provide security protocol endpoint for protocols such as at least DTLS, PSP, TLS, or others. In some examples, the network interface device can track order of receipt of encrypted data and perform decryption on in-order encrypted data. For example, FP data can be transmitted in encrypted packets and the network interface device can decrypt FP data prior to accumulation operations. Moreover, the network interface device can encrypt FP data, generated by accumulation or other arithmetic operations, prior to forwarding encrypted FP data to another network interface device or a host system.

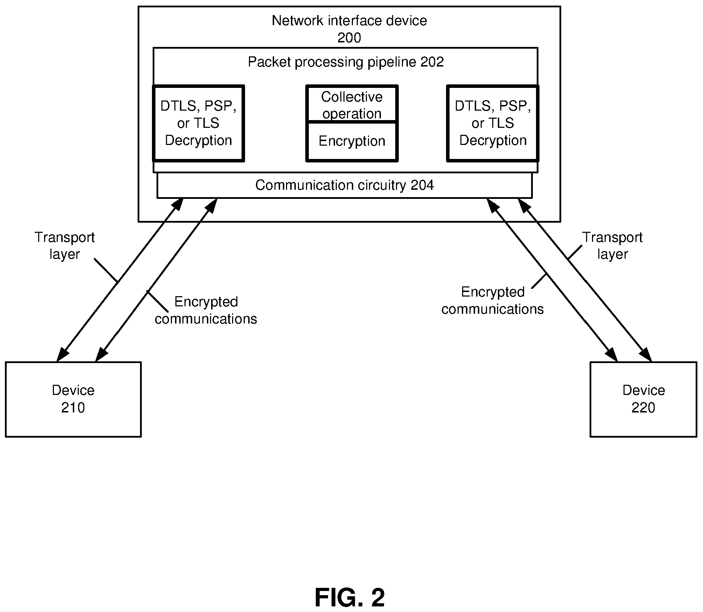

FIG. 2 depicts an example system. Network interface device 200 can serve as both transport protocol endpoint and security protocol endpoint for communications to and from device 210 and can serve as both transport protocol endpoint and security protocol endpoint for communications to and from device 220. The system can be part of a PS architecture or distributed ML or Deep neural network (DNN) system trained to perform inferences consistent with SwitchMI, (e.g., Sapio, A., "Scaling distributed machine learning with In-Network aggregation," 18th USENIX Symposium on Networked Systems Design and Implementation (NSDI 21) (2021)) or utilize one or more of: Message Passing Interface (MPI), Symmetric Hierarchical Memory Access (SHMEM), Unified Parallel C (UPC), or others. In some examples, devices 210 and 220 can represent workers in a PS environment and network interface device 200 can perform accumulation on data from devices 210 and 220 in a reproducible manner or associative manner and transmit results of accumulation to devices 210 and 220.

In some examples, network interface device 200 can include one or more of: a network interface controller (NIC), a remote direct memory access (RDMA)-enabled NIC, SmartNIC, router, switch, forwarding element, infrastructure processing unit (IPU) with a programmable packet processing pipeline, data processing unit (DPU), or edge processing unit (EPU). An edge processing unit (EPU) can include a network interface device that utilizes processors and accelerators (e.g., digital signal processors (DSPs), signal processors, or wireless specific accelerators for Virtualized Radio Access Networks (vRANs), cryptographic operations, compression/decompression, and so forth).

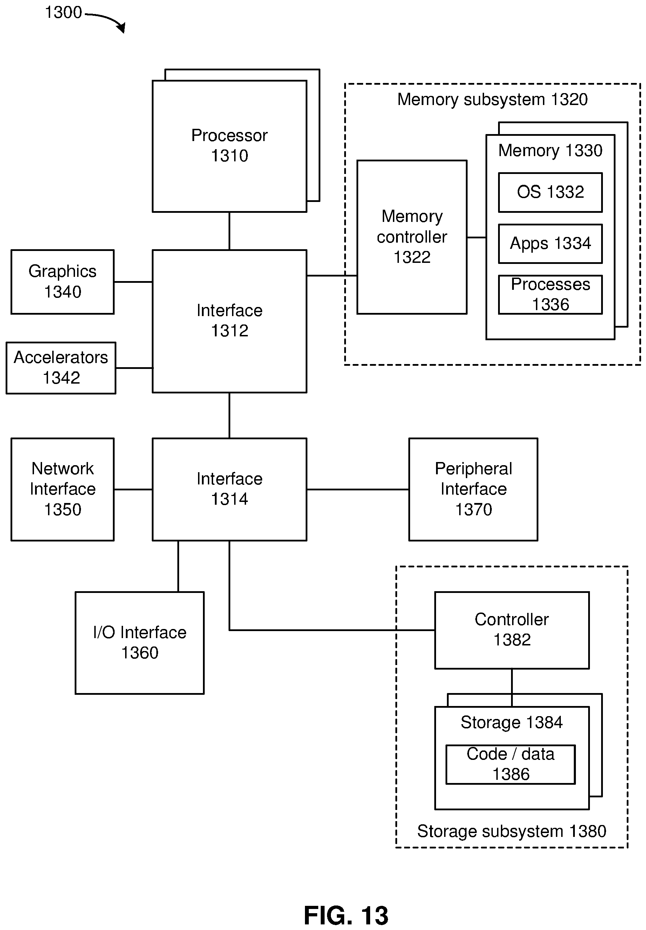

For example, device 210 can be implemented as one or more of: a network interface device, a host server system, a memory pool, a storage pool, accelerator pool, or other devices. For example, device 220 can be implemented as one or more of: a network interface device, a host server system, a memory pool, a storage pool, accelerator pool, or other devices. Various examples of host server systems are described at least with respect to FIG. 13.

In some examples, device 210 can transmit data to network interface device 200 and network interface device 200 is to process the data for collective operations. In some examples, device 220 can transmit data to network interface device 200 and network interface device 200 is to process the data for collective operations. In some examples, network interface device 200 and device 210 can transmit data by packets encrypted using an encryption protocol. Example encryption protocols can include one or more of: DTLS, PSP, TLS, Internet Protocol Security (IPSec), IEEE 802.1AE-2008 (MACsec), or others. In some examples, encrypted packets can be transmitted using an remote direct memory access (RDMA) protocol. Examples of RDMA protocols include at least remote direct memory access (RDMA) over Converged Ethernet (RoCE), RoCEv2, InfiniBand, or others. Various RDMA standards can be utilized, including, Network Working Group, "A Remote Direct Memory Access Protocol Specification," Request for Comments 5040 (2007). For example, for ML flows for collective operations, contents of an RDMA packet (e.g., header (e.g., one or more header fields or a strict subset of the header) and/or payload) can be encrypted by DTLS, PSP, or TLS. However, contents of RDMA packets of a flow that carry data for non-collective operations need not be encrypted.

RDMA can involve direct writes or reads to copy content of buffers across a connection without the operating system managing the copies. A network interface device can implement a direct memory access circuitry and create a channel from its RDMA circuitry though a bus to application memory. A send queue and receive queue can be used to transfer work requests and are referred to as a Queue Pair (QP). A requester can place work request instructions on its work queues that communicates to the interface contents of what buffers to send to or receive content from. A work request can include an identifier (e.g., pointer or memory address of a buffer). For example, a work request placed on a send queue (SQ) can include an identifier of a message or content in a buffer (e.g., application buffer) to be sent. By contrast, an identifier in a work request in a Receive Queue (RQ) can include a pointer to a buffer (e.g., app buffer) where content of an incoming message can be stored. An RQ can be used to receive an RDMA-based command or RDMA-based response. A Completion Queue (CQ) can be used to notify when the instructions placed on the work queues have been completed. In some examples, a QP can be allocated for a an RDMA connection between network interface device 200 and device 210. In some examples, a second QP can be allocated for a connection between network interface device 200 and device 220.

In some examples, instead of use of RDMA, packets can be transmitted using a reliable transport protocol and contents of packets (e.g., header and/or payload) can be encrypted by DTLS, PSP, or TLS. In a reliable transport protocol, a receiver confirms packet receipt to a data sender and after a timeout interval, the sender attempts retransmission of undelivered packet and/or the sender delays packet transmission based on detected network congestion. Non-limiting examples of reliable transport protocols include remote direct memory access in reliable mode RDMA Reliable Connection (RC)), InfiniBand, Transmission Control Protocol (TCP) (e.g., Internet Engineering Task Force (IETF) RFC 793 (1981), quick UDP Internet Connections (QUIC), RDMA over Converged Ethernet (RoCE) v2 (RoCEv2), Amazon's scalable reliable datagram (SRD), Amazon AWS Elastic Fabric Adapter (EFA), Microsoft Azure Distributed Universal Access (DUA) and Lightweight Transport Layer (LTL), Google GCP Snap Microkernel Pony Express, High Precision Congestion Control (HPCC) (e.g., Li et al., "HPCC: High Precision Congestion Control" SIGCOMM (2019)), improved RoCE NIC (IRN) (e.g., Mittal et al., "Revisiting network support for RDMA," SIGCOMM 2018), Homa (e.g., Montazeri et al., "Homa: A Receiver-Driven Low-Latency Transport Protocol Using Network Priorities," SIGCOMM 2018), NDP (e.g., Handley et al., "Re-architecting Datacenter Networks and Stacks for Low Latency and High Performance," SIGCOMM 2017), EQDS (e.g., Olteanu et al., "An edge-queued datagram service for all datacenter traffic," USENIX 2022), or others.

A flow can be a sequence of packets being transferred between two endpoints, generally representing a single session using a known protocol. Accordingly, a flow can be identified by a set of defined tuples and, for routing purpose, a flow is identified by the two tuples that identify the endpoints, e.g., the source and destination addresses. For content-based services (e.g., load balancer, firewall, intrusion detection system, etc.), flows can be differentiated at a finer granularity by using N-tuples (e.g., source address, destination address, IP protocol, transport layer source port, and destination port). A packet in a flow is expected to have the same set of tuples in the packet header. A packet flow can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier.

A packet may be used herein to refer to various formatted collections of bits that may be sent across a network, such as Ethernet frames, IP packets, TCP segments, UDP datagrams, etc. Also, as used in this document, references to L2, L3, L4, and L7 layers (layer 2, layer 3, layer 4, and layer 7) are references respectively to the second data link layer, the third network layer, the fourth transport layer, and the seventh application layer of the OSI (Open System Interconnection) layer model.

Reference to flows can instead or in addition refer to tunnels (e.g., Multiprotocol Label Switching (MPLS) Label Distribution Protocol (LDP), Segment Routing over IPv6 dataplane (SRv6) source routing, VXLAN tunneled traffic, GENEVE tunneled traffic, virtual local area network (VLAN)-based network slices, technologies described in Mudigonda, Jayaram, et al., "Spain: Cots data-center ethernet for multipathing over arbitrary topologies," NSDI. Vol. 10. 2010 (hereafter "SPAIN"), and so forth.

Network interface device 200 can utilize packet processing pipeline 202 to process received packet headers and decrypt packet headers and/or payloads, perform accumulation, computation, or arithmetic operations on data from the received packets, and re-encrypt results of the accumulation, computation, or arithmetic operations prior to transmission in one or more packets to another device (e.g., network interface device, host server system, or other devices described herein) or stored in memory of network interface device 200. Packet processing pipeline 202 can perform accumulation, computation, or arithmetic operations on received data, including: multiply-accumulate (MAC) operations (e.g., compute a product of two numbers and add the product to an accumulator), fused multiply-add (FMA), fused multiply-accumulate (FMAC), matrix multiplication, dot product, general matrix-matrix multiplication (GEMM) operations, summation of packet data with other packet data from other workers, multiplication, division, minimum, maximum, 16-bit number down conversion to 32-bit number, 32-bit number down conversion to 16-bit number, FP add, integer (INT) add, local minimum, local maximum, AND, OR, XOR, bitwise XOR, or other data computation operations related to Allreduce, ReduceScatter, or Allgather.

Packet processing pipeline 202 can perform accumulation, computation, or arithmetic operations on data of various formats, such as: single precision floating-point (e.g., 32 bits), half-precision floating point (e.g., 16 bits), custom floating point formats (e.g., BF16), integer words (e.g., 16 bits, 8 bits, 4 bits), INT8, INT4, 8-bit binary integer, 4-bit binary integer, 2-bit binary integer, bfloat (brain floating point), 16-bit floating point format, a tensor float 32-bit floating point format (TF32) with different numbers of mantissa and exponent bits relative to Institute of Electrical and Electronics Engineers (IEEE) 754 formats, or other formats.

In some examples, network interface device 200 can offload computation to a connected server, processor, or accelerator.

Operation of packet processing pipeline 202 can be programmed using one or more of: a configuration file, OneAPI, Programming protocol independent packet processors (P4), Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries.

Network interface device 200 can utilize communication circuitry 204 for communications with devices 210 and 220 over a network or fabric via one or more ports. Communication circuitry 204 may be configured to use any one or more communication technology (e.g., wired or wireless communications) and associated protocols (e.g., Ethernet, Bluetooth^{®}, Wi-Fi^{®}, 4G LTE, 5G, etc.) to perform such communication. Communication circuitry 204 can include one or more network hardware resources, such as ingress queues, egress queues, direct memory access (DMA) circuitry, crossbars, shared memory switches, media access control (MAC), physical layer interface (PHY), Ethernet port logic, and other network hardware resources.

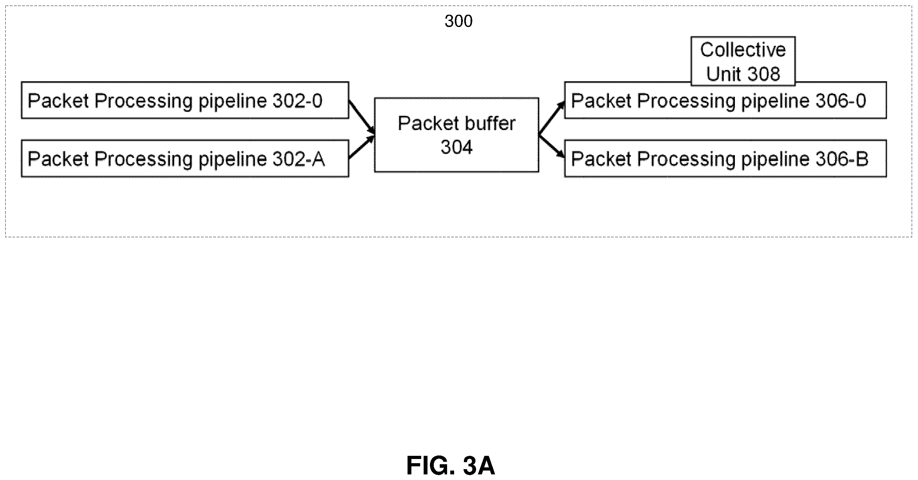

FIG. 3A depicts an example system. A network interface device can include switch circuitry 300 that includes ingress packet processing pipelines 302-0 to 302-A (where A is an integer), traffic manager and packet buffer 304, and egress pipeline pipelines 306-0 to 306-B (where B is an integer). One or more of ingress pipelines 302-0 to 302-A or egress pipelines 306-0 to 306-B can include or be configured to perform collective unit circuitry 308 that can provide both a transport protocol endpoint and security protocol endpoint as well as accumulation or arithmetic operations at least for FP values in a reproducible manner.

Collective unit circuitry 308 can perform transport layer management such as managing packet re-transmissions, establishing a security session with a device based on DTLS, PSP, TLS, or other security protocols, reordering packet data for decryption, performing decryption based on associated security association, ordering FP data for reproducible operations, performing accumulation, computation, or arithmetic operations on FP data, and performing data encryption for data generated by accumulation, computation, or arithmetic operations.

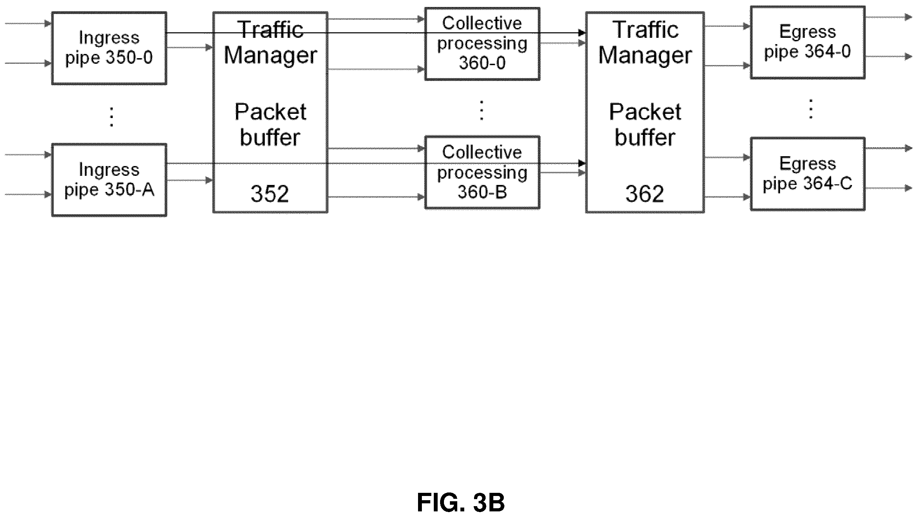

FIG. 3B depicts an example switch circuitry. Ingress pipeline 350-0 to 350-A, where A is an integer, can perform packet routing, switching, and packet integrity checks. After processing by an ingress pipeline, the packet is sent to traffic manager 352, where the packet is enqueued and placed in an output buffer prior to being provided to a collective processing pipeline. Collective processing pipes 360-0 to 360-B, where B is an integer, can perform transport protocol initiation with a device and provide a transport protocol endpoint. After processing by a collective processing pipeline, the packet is sent to traffic manager 362, where the packet is enqueued and placed in an output buffer prior to being provided to an egress pipeline. Egress pipelines 364-0 to 364-C, where C is an integer, can perform reproducible FP computations.

In some examples, switch circuitries of FIGs. 3A and 3B can be implemented as a system on chip (SoC) that includes at least one interface to other circuitry in a switch system. A switch SoC can be coupled to other devices in a switch system such as ingress or egress ports, memory devices, or host interface circuitry.

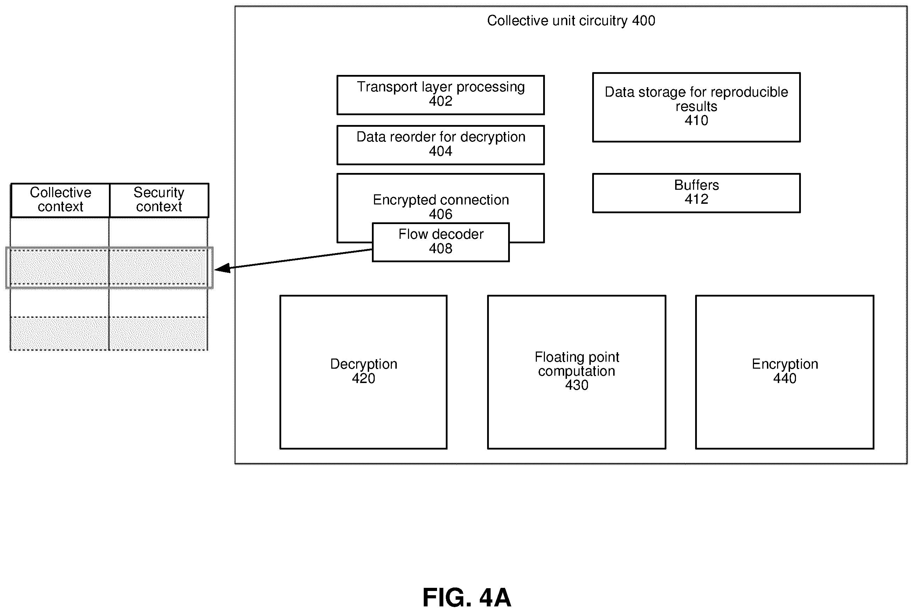

FIG. 4A depicts an example collective circuitry. Collective unit circuitry 400 can be implemented as one or more of: one or more processors; one or more programmable packet processing pipelines; one or more accelerators; one or more application specific integrated circuits (ASICs); one or more field programmable gate arrays (FPGAs); one or more graphics processing units (GPUs); one or more memory devices; one or more storage devices; or others.

Collective unit circuitry 400 can utilize transport layer processing 402 to provide a transport layer endpoint for reliable packet delivery and re-transmission by a transmitter device. For example, transport layer processing 402 can track receipt of packet sequence numbers and based on non-receipt of a sequence number or range of sequence numbers, request re-transmission of an unreceived packet by a transmitter network interface device. Transport layer processing 402 can store connection state for a flow. Connection state can include one or more of: initial packet sequence number, number of received bytes, received byte sequence numbers to keep received packets in order, n-tuple (e.g., source address, destination address, IP protocol, transport layer source port, and/or destination port), connection flags, or others. Transport layer processing 402 can cause transmission of data receipt acknowledgements (ACK) to a transmitter network interface devices to indicate receipt of packets.

Data re-order for decryption 404 can selectively reorder encrypted data (e.g., records or record segments) received in out-of-order packets prior to decryption of the data by decryption 420. For DTLS encrypted communications, DTLS provides that a single DTLS record is transmitted in one datagram and includes a record sequence number in the datagram. DTLS encrypted records can be decrypted independent of other DTLS records and regardless of order of packet receipt. Similarly, for PSP encrypted communications, PSP provides that a single PSP record is transmitted in one datagram and includes a record sequence number in the datagram. PSP encrypted records can be decrypted independent of other PSP records and regardless of order of packet receipt.

For TLS encrypted communications, TLS records can be split over multiple packets and if packets are received out of order, record segments from the packets are to be re-ordered prior to decryption of records. For out of order (OOO) packet receipt, prior to decryption of record segments, data re-order for decryption 404 can buffer record segments in buffers 412 and reorder record segments, as described herein.

Encrypted connection manager 406 can establish DTLS, PSP, TLS, or other cryptographic sessions when a collective session is established with hosts or network interface devices (e.g., devices 210 and 220). A collective flow can have a unique security context that is established when the collective flow is established. Keys can be refreshed periodically (e.g., daily), and the security associations (SAs) can be updated accordingly. For a flow, flow decoder 408 can look-up collective and security contexts using a single index value so that a single look up operation can be performed to access collective and security contexts instead of multiple look up operations. Security context can include information such as one or more of: specific security operations to perform, FP value length (e.g., number of bytes of floating point data in a packet), computation or arithmetic operation to perform, length of header, security keys, a nonce, the last encrypted or decrypted byte, packet sequence numbers, and so forth. Different collective flows can have unique security contexts established when the collective flow is established. Collective context can include information fields for processing packet segments of a flow by a collective operation. Collective context can include the location address of the intermediate collected value in buffers 412 or memory, the number format (e.g., floating point, integer, or other), and computation or arithmetic operation to be performed on a segment. Collective and security contexts can be stored in a data structure in on-chip memory of the network interface device.

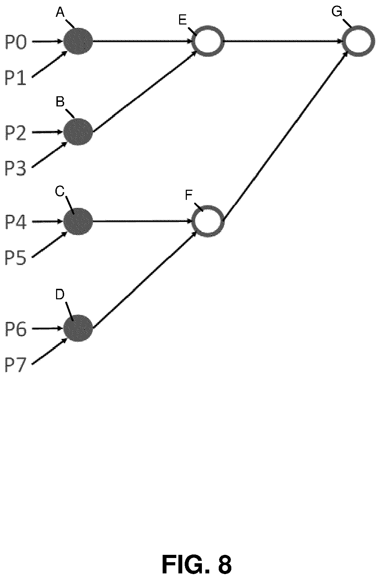

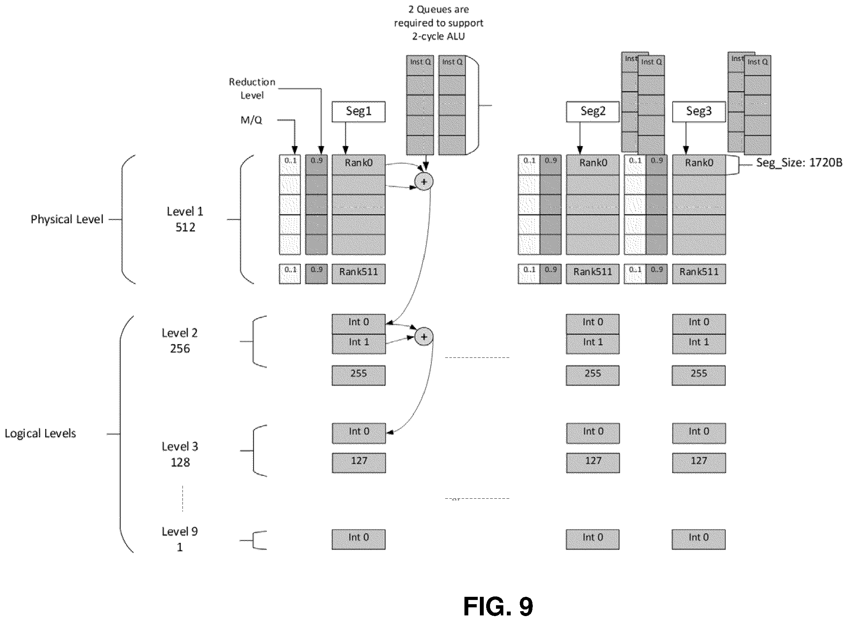

Data storage for reproducible results 410 can associate data for use in an FP operation with nodes of a logical tree structure. Various examples of logical tree identifier and node assignments described with respect to FIGs. 8 and 9 and can be stored in the collective context. Buffers 412 can store encrypted and/or decrypted packet headers and/or payload (e.g., data) associated with reproducible operations and non-reproducible operations. A remote host can be assigned to a node (e.g., leaf) in the tree. Data received in packets can be assigned to a node and stored in a buffer of buffers 412 associated with the node. For example, a node can be associated with a source IP address and receipt of a packet with such source IP address can cause storage of data of the packet into a buffer of buffers 412 associated with the node. As described with respect to FIGs. 8 and 9, after packets arrive at the network interface device and are authenticated, data from the packets can be copied into a buffer of buffers 412 associated with a tree leaf associated with the source host, and when the addition operands are stored, the operation can take place, and the intermediate result can be stored in a higher level leaf in the tree (e.g., parent) in a buffer of buffers 412. The final result can be at a root of the tree.

To decrypt DTLS encrypted packet contents, decryption 420 can utilize Advanced Encryption Standard with Galois/Counter Mode (AES-GCM) based on accessed security context. Data reorder for decryption 404 can reorder packet data received out of order that are to be decrypted according to DTLS.

To decrypt PSP encrypted packet contents, decryption 420 can perform key generation or key extraction based on AES-GCM to extract 128 bit or 256 bit length keys and can apply at least AES-GCM 128 or 256 to decrypt packet contents. For PSP, decryption key can be derived from the packet, or the complete security association (SA) derived from the packet. Main keys can be used to derive SA or Decryption Key from the Security Parameter Index (SPI) can be per connection or per network interface device.

To decrypt TLS records, techniques described at least with respect to TLS Protocol Version 1.3, RFC 8446 (August 2018), and variations thereof can be applied by the network interface device after reordering segments of a byte stream.

Floating point computation 430 can perform collective operations such as computation or arithmetic operations. Various examples of computation or arithmetic operations are described herein such as: MAC, FMA, FMAC, matrix multiplication, dot product, GEMM operations, summation of packet data with other packet data from other workers, multiplication, division, minimum, maximum, or other data computation operations related to Allreduce, ReduceScatter, or Allgather. FP formats can include at least FP8, FP16, FP32, FP64, FPx (where x is an integer), INT16, INT32, INT64, UINT16, UINT32, UINT64, BF16, and other formats. In some examples, FP8 can be based on E4M3, E5M2, or others. E4M3 can represent 4-bit exponent and 3-bit mantissa whereas E5M2 can represent 5-bit exponent and 2-bit mantissa.

Encryption 440 can encrypt a packet header portion and/or payload based on DTLS, PSP, or TLS.

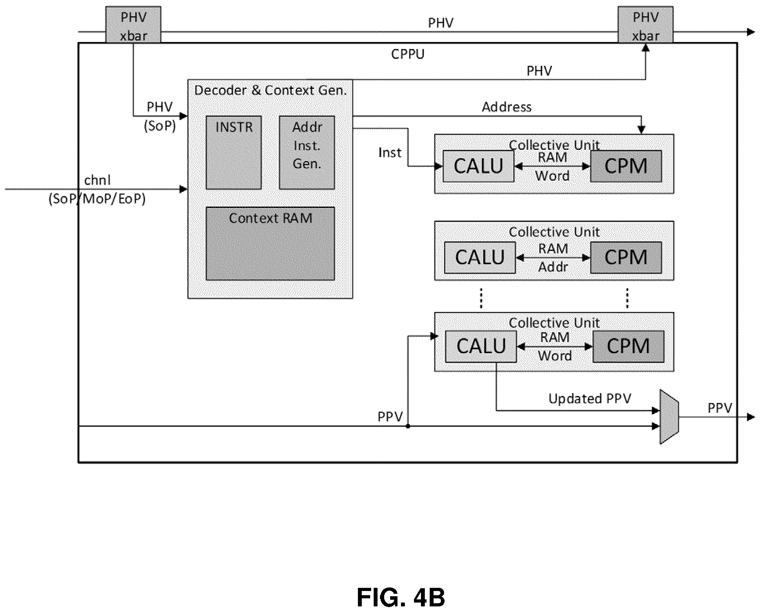

FIG. 4B depicts an example collective unit circuitry. Packet header vector (PHV) can include one or more packet header fields of a received packet. Instruction lookup (INSTR) can lookup an instruction (Inst) (e.g., read, add, store, or others) to perform to process packet payload data (PPV) based on a context from context random access memory (RAM). Multiple collective units can perform arithmetic operations on one or more packet payload data in series or in parallel.

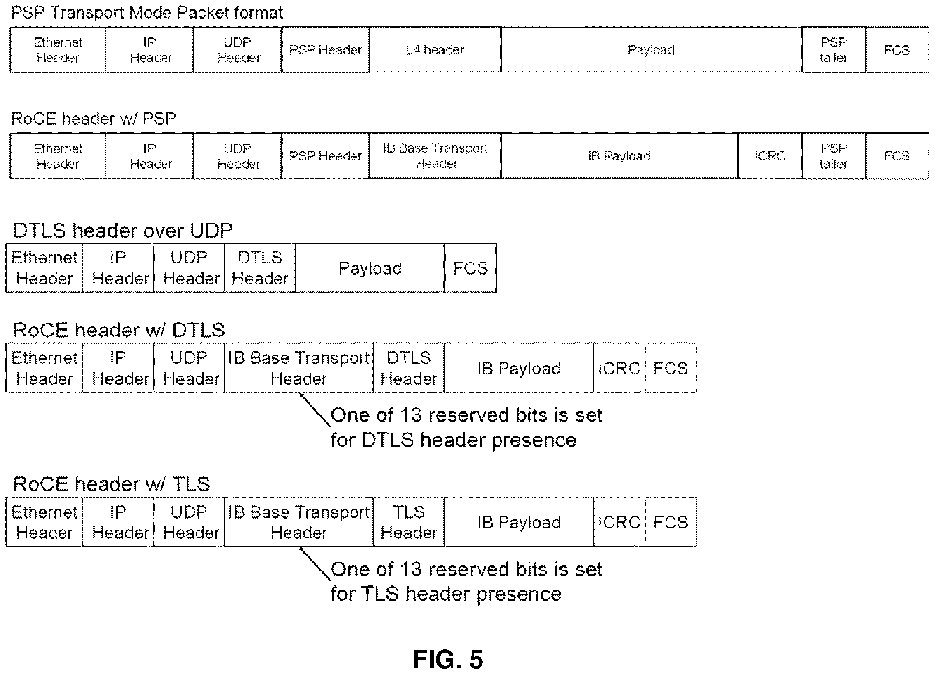

FIG. 5 depicts an example of packet formats. Some portions of the packet header fields can be clear text (e.g., unencrypted) and can be processed by the network interface device without decryption whereas other portions of the packet header fields and payload can be encrypted and are to be decrypted prior to processing by the network interface device. A PSP transport mode packet as well as RoCE packet with PSP header are depicted. In addition, a DTLS packet transmitted over UDP or RoCE is depicted. As described in Internet Engineering Task Force (IETF) "The Datagram Transport Layer Security (DTLS) Protocol Version 1.3" Version 1.3 (2020) (draft-ietf-tls-dtls 13-38), a DTLS header can include: Connection identifier (ID), Sequence Number, Length. A RoCE packet with TLS header is depicted. A packet payload can store one or more FP values.

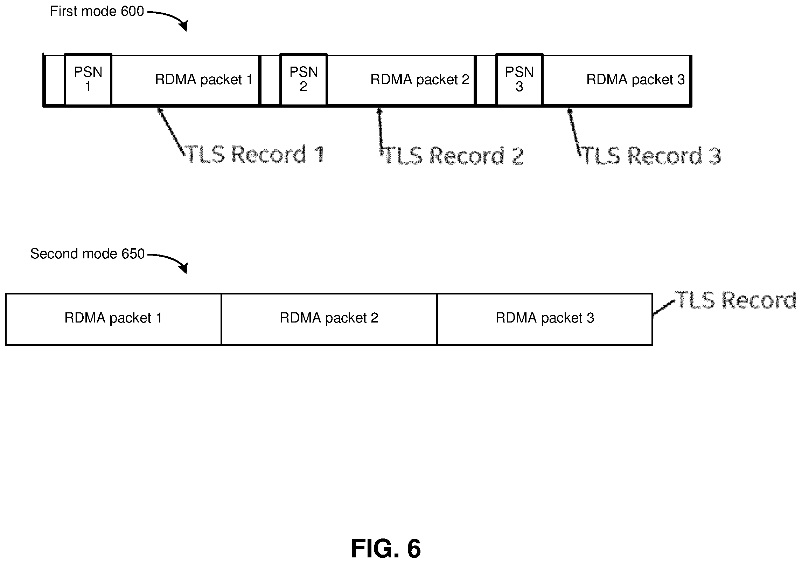

FIG. 6 depicts an example of TLS record alignment with RDMA packets. TLS records may not contain sequence numbers and both sender and receiver keep track of how many records were sent and received. An implicit record sequence number can be used to encrypt or decrypt the records. An implicit record sequence number can be used as a nonce for AES-GCM operations, where a nonce is a value that has to be unique for AES-GCM encryption/decryption operations. As a nonce is not transmitted with a packet and is calculated independently by the endpoints, the TLS records are to be processed in order to use the same nonce (implicit record number) for encryption and decryption operations. When a TLS record is transmitted over a reliable transport such as TCP, packet re-ordering can occur based on packet sequence numbers, and the TLS decryption operates on a stream of in-order records. However, RDMA can be transmitted over unreliable User Datagram Protocol (UDP) datagram. Hence, the packets may not arrive in-order at a receiver.

A pair of network interface devices can be configured to operate in mode 600 or 650. In mode 600, a TLS record is transmitted in a single RDMA packet and an RDMA packet sequence number (PSN) indicates the value of the nonce. For example, RDMA packets 1-3 can include PSNs 1-3. Where a TLS nonce is a 64b (64 bit) value but the RDMA packet sequence number is 24 bit, as long as the RDMA PSN does not wrap around, a full 64b TLS record sequence number can be derived from the 24b RDMA PSN in a manner described in Supplement to InfiniBand^{™} Architecture Specification Volume 1 Release 1.2.1, Annex A17: RoCEv2 (September 2, 2014). In mode 600, a TLS record from an RDMA packet can be decrypted or encrypted independently as the PSN from the packet can be used to derive the nonce value reliably.

In mode 650, a TLS record spans over one or more packets in this case RDMA packets whereby an encrypted TLS record can be sent over one or more RDMA packets so that multiple RDMA packets contain a part of a TLS record (e.g., RDMA message) but no RDMA packet carries more than one TLS record (e.g., the end of one TLS record and the beginning of another TLS record). An RDMA message can include multiple RDMA packets that include a single TLS record and RDMA packets within one RDMA message are to be encrypted in order As an endpoint, a network interface device can maintain a bit-map or data to track the status of packet arrivals in one or more flows and can prevent a packet from being processed twice in the case of retransmission by detecting duplicate packets or can detect missing RDMA packets and cause retransmission of missing RDMA packets. As an endpoint, a network interface device (e.g., packet processing pipeline or collective unit) can perform reordering of RDMA packets to reorder TLS record segments. Reliable transport can occur prior to packet decryption and an RDMA PSN can be unencrypted (e.g., clear text) and authenticated prior to use to reorder RDMA packets. Various manners to store TLS record segments are described herein.

As described earlier, a network interface device can perform reproducible floating point operations so that regardless of order of packet arrival, accumulation is performed in a predefined order whereby a stream of floating point numbers from different hosts are processed in a predefined host order, and hence the result is reproducible. A packet header and/or payload can be stored in a buffer, while waiting for packet header and/or payload from another host to arrive for computation to commence. The reproducible order is a predefined order of operations for data from different hosts, while the flow order is the relative order of packets transmitted by a single host. In some examples, memory used to store data for reproducible operations and the bitmap management can track the arrival of the packets can be utilized for reproducibility and TLS flow reconstruction.

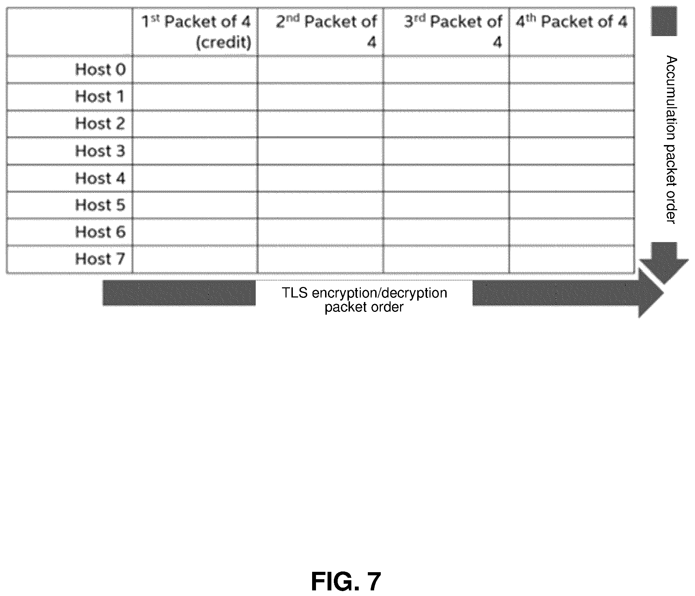

FIG. 7 depicts an example manner to reorder packets. A bitmap or data structure can track arrival of packets from multiple hosts (e.g., 8 or other number) in a window of multiple packet span (e.g., 4 or other number). TLS decryption can be performed on TLS record in RDMA PSN order per row while the accumulation can be performed in host rank order per column. For example, TLS decryption can be performed on a TLS record received via RDMA packets with PSN numbered 1 to 4. For example, accumulation can be performed in host rank order for a same PSN value for the hosts in an accumulation group (e.g., 0 to 7).

Packet authentication can be performed based at least on Network Working Group RFC 4302, "IP Authentication Header" (December 2005). For example, portions of the packet header (e.g., IP header) can be used to authenticate a sender or origin of the packet. If packet authentication fails, an intermediate buffer with packet data is cleared or marked as invalid and an interrupt can be raised and a system level action takes place (e.g., stop a collective operation, restart a collective operation, identify a potentially compromised network interface device).

Description next turns to a manner to associate data from pairs of hosts to provide reproducible results from data. FIG. 8 depicts an example accumulation tree for an addition operation. In some examples, a network interface device can perform a pre-determined order of operations of (((P0+P1)+(P2+P3)) + ((P4+P5)+(P6+P7))) based on floating point data from received packets P0 to P7 received from respective hosts 0 to 7. However, packets from different hosts can arrive at the network interface device out of order and, for a reproducible floating point operation, addition operations cannot proceed until data of additions of operand pairs are received.

For example, for a Case I, packet P0 arrives before packet P1 and data from packet P0 can be stored while waiting for data from packet P1. Addition operations can take place after receipt of data from packets P1. For example, for a Case I, packet P1 arrives before packet P0 and data from packet P1 can be stored while waiting for data from packet P0. Addition operations can take place after receipt of data from packet P0. For Case I, the network interface device packet processing pipeline can perform an instruction store(packet, address) to store data for packet P0 while waiting for data from packet P1 or store data for packet P1 while waiting for data from packet P0. Similar operations can occur for data from commutative pairs P2 and P3, P4 and P5, and P6 and P7. Note that while examples are shown for data from pairs of packets, examples can apply to operations on data from more than two sources.

For example, for a Case II, a second data of a group of two or more data that are to be processed together in an accumulation operation are received and stored at the network interface device. For example, arrival of a last data, in one or more packets, in the group of two or more data that are to be processed together in a commutative accumulation operation can cause retrieval of stored data of the group, performance of the accumulation operation using the last data, and overwriting the stored data with the result of the accumulation operation. For example, instruction ADD(received packet data, sibling data address, parent address) can be performed to retrieve a previously stored data, add the received packet data to the stored data, and store the added sum in a buffer for the previously stored data. Instruction PUSH(ADD(Sibling1 address, sibling2 address, Parent address)) can enqueue an instruction to perform addition of pairs of data when there is cycle available.

For example, for a Case III, where a packet processing pipeline or other circuitry has an available cycle(s) to process an enqueued instruction, the enqueued instruction can be executed by the packet processing pipeline or other circuitry. For example, an instruction queue can store ADD(Sibling1 address, sibling2 address, Parent address). For example, P0 and P1 are siblings, P2 and P3 are siblings, P4 and P5 are siblings, and P6 and P7 are siblings. Parent A can represent a summation of P0 and P1 whereas parent B can represent a summation of P2 and P3 so that parents A and B become siblings. Based on computation of B but not of A, siblings P0 and P1 can be read from storage and become operands for instruction ADD(Sibling1 address, sibling2 address, Parent address) so that a sum of P0 and P1 are stored in parent address for A. In some examples, different addresses can be associated with P0 to P7.

The following is an example sequence of instructions to perform pre-determined order of operations of (((P0+P1)+(P2+P3)) + ((P4+P5)+(P6+P7))). Note that instructions can be stored in an instruction queue of a collective unit (e.g., INSTR). Based on arrival of data from packet P0, execute store(P0) (Case I) to store data from P0. Based on arrival of data from packet P1, execution of ADD(P0, P1, P0) can cause storage of addition of P0 and P1 (parent A) in-place of data from P0 (Case II). Based on arrival of data from packet P4, execution of store(P4) (Case I) to store data of P4. Based on arrival of data from packet P5, execution of ADD(P4, P5, P4) can cause a store an addition of P4 and P5 (parent C) in-place of data of P4 (Case II).

Based on arrival of data from packet P6, execution of store(P6) (Case I) can cause storage of data for P6. Based on arrival of data from packet P7, execution of ADD(P6, P7, P6) can cause storage of an addition of P6 and P7 (parent D) in-place of data from P6 (Case II). Instruction Push(ADD(P4, P6)) (Case III) can enqueue an add command to cause addition of parents C and D in a commutative manner.

Based on arrival of data from packet P2, execution of store(P2) can cause storage of data from P2 (Case I). Based on arrival of data from packet P3, execution of ADD(P2, P3, P2) can cause addition of P2 and P3 (parent B) and storage of the result in-place of data for P2 (Case II). Instruction Push(ADD(P0, P2, P0)) (Case III) can be enqueued to cause addition of parents A and B and store the result (parent E) in place of parent A in a commutative manner.

Instruction Push(ADD(P0, P4, P0)) (Case III) can be enqueued to cause addition of parents E and F and store the result (parent G) in place of parent E. The enqueued instructions (add(P4, P6), add(P0, P2, P0), add(P0, P4, P0)) can be dequeued and executed when there is one or more available cycles of packet processing pipeline.

FIG. 9 depicts an example system. In this example, 512 ranks or buffers are allocated for 512 hosts to contribute data to the ranks or buffers for a collective operation. However, other numbers of ranks or buffers can be allocated depending on a number of hosts that contribute data to a collective operation. For example, with reference to the example of FIG. 8, there are 8 hosts and 8 ranks or buffers can be reserved. For example, with reference to the example of FIG. 8, level 1 can store data for leaves P0 to P7, level 2 can store values of parents A-D, level 3 can store values of parents E and F, and level 4 can store the value for parent G (root node). At each level, a rank or buffer can be overwritten with a sum to reduce memory usage.

In some examples, one or more segments can correspond to a single FP value. For example, segment 1 (Seg1) can represent a first segment of an FP number, segment 2 (Seg2) can represent a second segment of the FP number, and segment 3 (Seg3) can represent a third segment of the FP number. Segments of a packet can be added in sequence, in some examples.

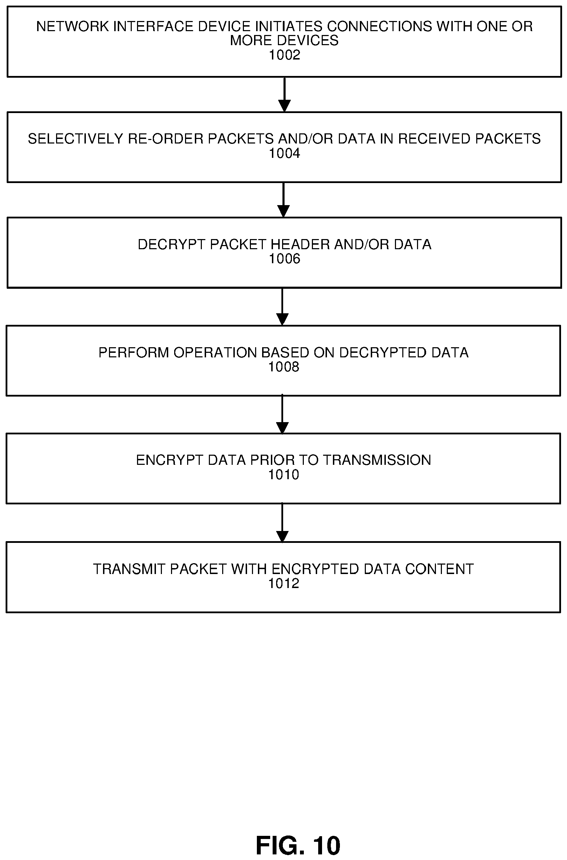

FIG. 10 depicts an example process. The process can be performed by a network interface device. At 1002, a network interface device can form a communication connection with one or more devices to provide an endpoint for a transport layer and a security protocol. For example, connection can utilize RDMA or a reliable transport protocol and encrypt header and/or payload portions based on DTLS, PSP, TLS, or other encryption schemes. The network interface device can terminate a transport layer connection at least by tracking receipt of packet sequence numbers (PSNs) of packets and requesting re-transmission of packets associated with unreceived PSNs by sender network interface devices.

At 1004, based on receipt of packets out of order from a device or from multiple devices, the network interface device can re-order data prior to decryption of data. For example, where an encrypted record is transmitted and received via multiple packets and the multiple packets are received out of order, the network interface device can re-order encrypted data from the packets prior to decryption of the data. However, where encrypted data is received in order or encrypted data can be decrypted without consideration of a packet receipt order, the network interface device can need not reorder the encrypted data with respect to other encrypted data.

At 1006, the network interface device can decrypt encrypted data based on an applicable cryptographic protocol. Example cryptographic protocols include DTLS, PSP, TLS, IPSec, MACsec, or others. In some examples, the network interface device can retrieve a context with a security context and collective context for a packet flow using a single retrieval operation. The network interface device can decrypt data based on metadata in the security context.

At 1008, the network interface device can perform computations based on decrypted data. Various examples of computation are described herein such as: MAC, FMA, FMAC, matrix multiplication, dot product, GEMM operations, summation of packet data with other packet data from other workers, multiplication, division, minimum, maximum, or other data computation operations. The network interface device can perform the computation as part of a series of operations to generate a reproducible result. The network interface device can perform the computation based on metadata in the collective context.

At 1010, the network interface device can encrypt a result of the computation(s) based on an applicable cryptographic protocol. Example cryptographic protocols include DTLS, PSP, TLS, IPSec, MACsec, or others.

At 1012, the network interface device can transmit the encrypted data to a device. The network interface device can transmit the encrypted data to a device in packets transmitted based on an RDMA or a reliable transport protocol. In some examples, prior to packet transmission, the network interface device can encrypt packet header and/or payload portions based on DTLS, PSP, TLS, or other encryption schemes.

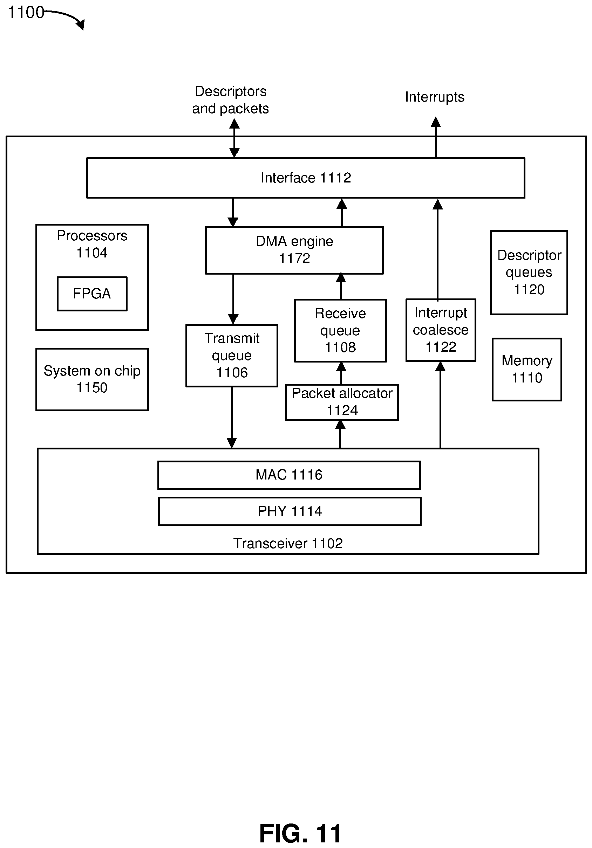

FIG. 11 depicts an example network interface device or packet processing device. In some examples, circuitry of network interface device can be utilized to provide a transport layer and security protocol endpoint and perform computations on received data, as described herein. In some examples, packet processing device 1100 can be implemented as a network interface controller, network interface card, a host fabric interface (HFI), or host bus adapter (HBA), and such examples can be interchangeable. Packet processing device 1100 can be coupled to one or more servers using a bus, PCIe, CXL, or Double Data Rate (DDR). Packet processing device 1100 may be embodied as part of a system-on-a-chip (SoC) that includes one or more processors, or included on a multichip package that also contains one or more processors.

Some examples of packet processing device 1100 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 1100 can include transceiver 1102, processors 1104, transmit queue 1106, receive queue 1108, memory 1110, and host interface 1112, and DMA engine 1152. Transceiver 1102 can be capable of receiving and transmitting packets in conformance with the applicable protocols such as Ethernet as described in IEEE 802.3, although other protocols may be used. Transceiver 1102 can receive and transmit packets from and to a network via a network medium (not depicted). Transceiver 1102 can include PHY circuitry 1114 and media access control (MAC) circuitry 1116. PHY circuitry 1114 can include encoding and decoding circuitry (not shown) to encode and decode data packets according to applicable physical layer specifications or standards. MAC circuitry 1116 can be configured to assemble data to be transmitted into packets, that include destination and source addresses along with network control information and error detection hash values.

Processors 1104 can be any a combination of a: processor, core, graphics processing unit (GPU), field programmable gate array (FPGA), application specific integrated circuit (ASIC), or other programmable hardware device that allow programming of network interface 1100. For example, a "smart network interface" can provide packet processing capabilities in the network interface using processors 1104.

Processors 1104 can include one or more packet processing pipeline that can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines can perform one or more of: packet parsing (parser), exact match-action (e.g., small exact match (SEM) engine or a large exact match (LEM)), wildcard match-action (WCM), longest prefix match block (LPM), a hash block (e.g., receive side scaling (RSS)), a packet modifier (modifier), or traffic manager (e.g., transmit rate metering or shaping). For example, packet processing pipelines can implement access control list (ACL) or packet drops due to queue overflow.

Configuration of operation of processors 1104, including its data plane, can be programmed based on one or more of: Protocol-independent Packet Processors (P4), Software for Open Networking in the Cloud (SONiC), Broadcom^{®} Network Programming Language (NPL), NVIDIA^{®} CUDA^{®}, NVIDIA^{®} DOCA^{™}, Infrastructure Programmer Development Kit (IPDK), among others.

Packet allocator 1124 can provide distribution of received packets for processing by multiple CPUs or cores using receive side scaling (RSS). When packet allocator 1124 uses RSS, packet allocator 1124 can calculate a hash or make another determination based on contents of a received packet to determine which CPU or core is to process a packet.

Interrupt coalesce 1122 can perform interrupt moderation whereby network interface interrupt coalesce 1122 waits for multiple packets to arrive, or for a time-out to expire, before generating an interrupt to host system to process received packet(s). Receive Segment Coalescing (RSC) can be performed by network interface 1100 whereby portions of incoming packets are combined into segments of a packet. Network interface 1100 provides this coalesced packet to an application.

Direct memory access (DMA) engine 1152 can copy a packet header, packet payload, and/or descriptor directly from host memory to the network interface or vice versa, instead of copying the packet to an intermediate buffer at the host and then using another copy operation from the intermediate buffer to the destination buffer.

Memory 1110 can be any type of volatile or non-volatile memory device and can store any queue or instructions used to program network interface 1100. Transmit queue 1106 can include data or references to data for transmission by network interface. Receive queue 1108 can include data or references to data that was received by network interface from a network. Descriptor queues 1120 can include descriptors that reference data or packets in transmit queue 1106 or receive queue 1108. Host interface 1112 can provide an interface with host device (not depicted). For example, host interface 1112 can be compatible with PCI, PCI Express, PCI-x, Serial ATA, and/or USB compatible interface (although other interconnection standards may be used).

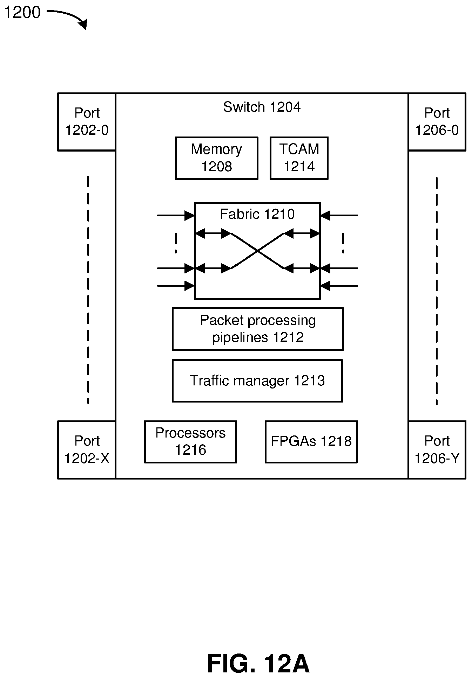

FIG. 12A depicts an example switch. Various examples can be used in or with the switch to provide a transport layer and security protocol endpoint and perform computations on received data, as described herein. Switch 1204 can route packets or frames of any format or in accordance with any specification from any port 1202-0 to 1202-X to any of ports 1206-0 to 1206-Y (or vice versa). Any of ports 1202-0 to 1202-X can be connected to a network of one or more interconnected devices. Similarly, any of ports 1206-0 to 1206-Y can be connected to a network of one or more interconnected devices.

In some examples, switch fabric 1210 can provide routing of packets from one or more ingress ports for processing prior to egress from switch 1204. Switch fabric 1210 can be implemented as one or more multi-hop topologies, where example topologies include torus, butterflies, buffered multi-stage, etc., or shared memory switch fabric (SMSF), among other implementations. SMSF can be any switch fabric connected to ingress ports and egress ports in the switch, where ingress subsystems write (store) packet segments into the fabric's memory, while the egress subsystems read (fetch) packet segments from the fabric's memory.

Memory 1208 can be configured to store packets received at ports prior to egress from one or more ports. Packet processing pipelines 1212 can include ingress and egress packet processing circuitry to respectively process ingressed packets and packets to be egressed. Packet processing pipelines 1212 can determine which port to transfer packets or frames to using a table that maps packet characteristics with an associated output port. Packet processing pipelines 1212 can be configured to perform match-action on received packets to identify packet processing rules and next hops using information stored in a ternary content-addressable memory (TCAM) tables or exact match tables in some examples. For example, match-action tables or circuitry can be used whereby a hash of a portion of a packet is used as an index to find an entry (e.g., forwarding decision based on a packet header content). Packet processing pipelines 1212 can implement access control list (ACL) or packet drops due to queue overflow. Packet processing pipelines 1212 can be configured to provide a transport layer and security protocol endpoint and perform computations on received data, as described herein. Configuration of operation of packet processing pipelines 1212, including its data plane, can be programmed using P4, C, Python, Broadcom Network Programming Language (NPL), or x86 compatible executable binaries or other executable binaries. Processors 1216 and FPGAs 1218 can be utilized for packet processing or modification.

Traffic manager 1213 can perform hierarchical scheduling and transmit rate shaping and metering of packet transmissions from one or more packet queues. Traffic manager 1213 can perform congestion management such as flow control, congestion notification message (CNM) generation and reception, priority flow control (PFC), and others.

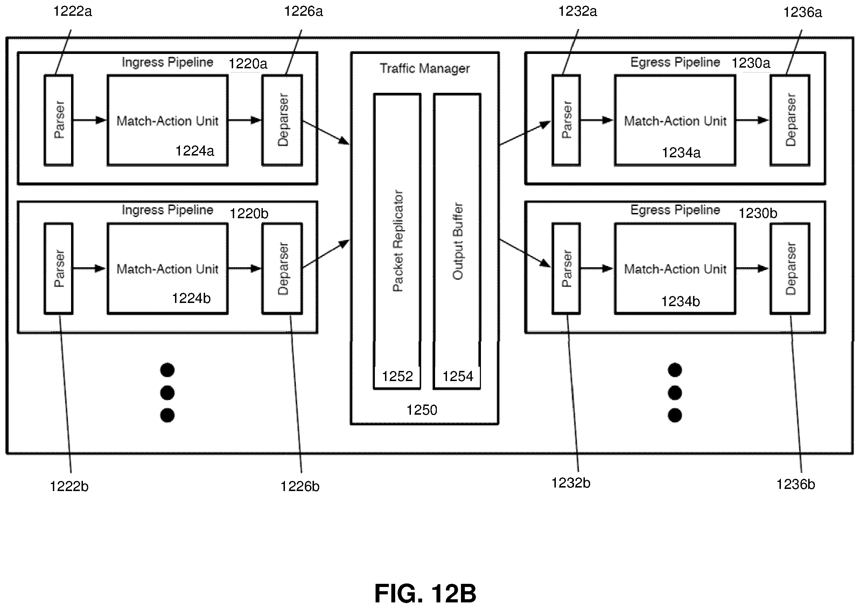

FIG. 12B depicts an example network forwarding system that can be used as a network interface device or router. Forwarding system can provide a transport layer and security protocol endpoint and perform computations on received data, as described herein. For example, FIG. 12B illustrates several ingress pipelines 1220, a traffic management unit (referred to as a traffic manager) 1250, and several egress pipelines 1230. Though shown as separate structures, in some examples the ingress pipelines 1220 and the egress pipelines 1230 can use the same circuitry resources. In some examples, egress pipelines 1230 can perform operations of a collective unit circuitry, as described herein.

Operation of pipelines can be programmed using Programming Protocol-independent Packet Processors (P4), C, Python, Broadcom NPL, or x86 compatible executable binaries or other executable binaries. In some examples, the pipeline circuitry is configured to process ingress and/or egress pipeline packets synchronously, as well as non-packet data. That is, a particular stage of the pipeline may process any combination of an ingress packet, an egress packet, and non-packet data in the same clock cycle. However, in other examples, the ingress and egress pipelines are separate circuitry. In some of these other examples, the ingress pipelines also process the non-packet data.

In some examples, in response to receiving a packet, the packet is directed to one of the ingress pipelines 1220 where an ingress pipeline may correspond to one or more ports of a hardware forwarding element. After passing through the selected ingress pipeline 1220, the packet is sent to the traffic manager 1250, where the packet is enqueued and placed in the output buffer 1254. In some examples, the ingress pipeline 1220 that processes the packet specifies into which queue the packet is to be placed by the traffic manager 1250 (e.g., based on the destination of the packet or a flow identifier of the packet). The traffic manager 1250 then dispatches the packet to the appropriate egress pipeline 1230 where an egress pipeline may correspond to one or more ports of the forwarding element. In some examples, there is no necessary correlation between which of the ingress pipelines 1220 processes a packet and to which of the egress pipelines 1230 the traffic manager 1250 dispatches the packet. That is, a packet might be initially processed by ingress pipeline 1220b after receipt through a first port, and then subsequently by egress pipeline 1230a to be sent out a second port, etc.

A least one ingress pipeline 1220 includes a parser 1222, a chain of multiple match-action units or circuitry (MAUs) 1224, and a deparser 1226. Similarly, egress pipeline 1230 can include a parser 1232, a chain of MAUs 1234, and a deparser 1236. The parser 1222 or 1232, in some examples, receives a packet as a formatted collection of bits in a particular order, and parses the packet into its constituent header fields. In some examples, the parser starts from the beginning of the packet and assigns header fields to fields (e.g., data containers) for processing. In some examples, the parser 1222 or 1232 separates out the packet headers (up to a designated point) from the payload of the packet, and sends the payload (or the entire packet, including the headers and payload) directly to the deparser without passing through the MAU processing. Egress parser 1232 can use additional metadata provided by the ingress pipeline to simplify its processing.

The MAUs 1224 or 1234 can perform processing on the packet data. In some examples, the MAUs includes a sequence of stages, with each stage including one or more match tables and an action engine. A match table can include a set of match entries against which the packet header fields are matched (e.g., using hash tables), with the match entries referencing action entries. When the packet matches a particular match entry, that particular match entry references a particular action entry which specifies a set of actions to perform on the packet (e.g., sending the packet to a particular port, modifying one or more packet header field values, dropping the packet, mirroring the packet to a mirror buffer, etc.). The action engine of the stage can perform the actions on the packet, which is then sent to the next stage of the MAU. For example, MAU(s) can provide a transport layer and security protocol endpoint and perform computations on received data, as described herein.

The deparser 1226 or 1236 can reconstruct the packet using the PHV as modified by the MAU 1224 or 1234 and the payload received directly from the parser 1222 or 1232. The deparser can construct a packet that can be sent out over the physical network, or to the traffic manager 1250. In some examples, the deparser can construct this packet based on data received along with the PHV that specifies the protocols to include in the packet header, as well as its own stored list of data container locations for each possible protocol's header fields.

Traffic manager (TM) 1250 can include a packet replicator 1252 and output buffer 1254. In some examples, the traffic manager 1250 may include other components, such as a feedback generator for sending signals regarding output port failures, a series of queues and schedulers for these queues, queue state analysis components, as well as additional components. Packet replicator 1252 of some examples performs replication for broadcast/multicast packets, generating multiple packets to be added to the output buffer (e.g., to be distributed to different egress pipelines).

The output buffer 1254 can be part of a queuing and buffering system of the traffic manager in some examples. The traffic manager 1250 can provide a shared buffer that accommodates any queuing delays in the egress pipelines. In some examples, this shared output buffer 1254 can store packet data, while references (e.g., pointers) to that packet data are kept in different queues for each egress pipeline 1230. The egress pipelines can request their respective data from the common data buffer using a queuing policy that is control-plane configurable. When a packet data reference reaches the head of its queue and is scheduled for dequeuing, the corresponding packet data can be read out of the output buffer 1254 and into the corresponding egress pipeline 1230.

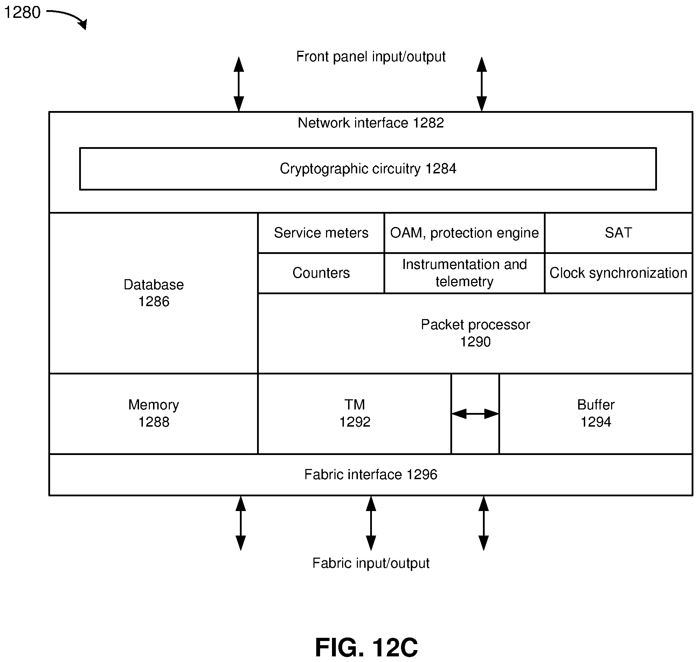

FIG. 12C depicts an example switch. Various examples can be used in or with the switch to provide a transport layer and security protocol endpoint and perform computations on received data, as described herein. Switch 1280 can include a network interface 1280 that can provide an Ethernet consistent interface. Network interface 1280 can support for 25 GbE, 50 GbE, 100 GbE, 200 GbE, 400GbE Ethernet port interfaces. Cryptographic circuitry 1284 can perform at least Media Access Control security (MACsec) or Internet Protocol Security (IPSec) decryption for received packets or encryption for packets to be transmitted.

Various circuitry can perform one or more of: service metering, packet counting, operations, administration, and management (OAM), protection engine, instrumentation and telemetry, and clock synchronization (e.g., based on IEEE 1588).

Database 1286 can store a device's profile to configure operations of switch 1280. Memory 1288 can include High Bandwidth Memory (HBM) for packet buffering. Packet processor 1290 can perform one or more of: decision of next hop in connection with packet forwarding, packet counting, access-list operations, bridging, routing, Multiprotocol Label Switching (MPLS), virtual private LAN service (VPLS), L2VPNs, L3VPNs, OAM, Data Center Tunneling Encapsulations (e.g., VXLAN and NV-GRE), or others. Packet processor 1290 can include one or more FPGAs. Buffer 1294 can store one or more packets. Traffic manager (TM) 1292 can provide per-subscriber bandwidth guarantees in accordance with service level agreements (SLAs) as well as performing hierarchical quality of service (QoS). Fabric interface 1296 can include a serializer/de-serializer (SerDes) and provide an interface to a switch fabric.

Operations of components of switches of examples of switches of FIG. 12A, 12B, and/or 12C can be combined and components of the switches of examples of FIG. 12A, 12B, and/or 12C can be included in other examples of switches of examples of FIG. 12A, 12B, and/or 12C. For example, components of examples of switches of FIG. 12A, 12B, and/or 12C can be implemented in a switch system on chip (SoC) that includes at least one interface to other circuitry in a switch system. A switch SoC can be coupled to other devices in a switch system such as ingress or egress ports, memory devices, or host interface circuitry.

FIG. 13 depicts a system. In some examples, circuitry can provide a transport layer and security protocol endpoint and perform computations on received data, as described herein. System 1300 includes processor 1310, which provides processing, operation management, and execution of instructions for system 1300. Processor 1310 can include any type of microprocessor, central processing unit (CPU), graphics processing unit (GPU), XPU, processing core, or other processing hardware to provide processing for system 1300, or a combination of processors. An XPU can include one or more of: a CPU, a graphics processing unit (GPU), general purpose GPU (GPGPU), and/or other processing units (e.g., accelerators or programmable or fixed function FPGAs). Processor 1310 controls the overall operation of system 1300, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 1300 includes interface 1312 coupled to processor 1310, which can represent a higher speed interface or a high throughput interface for system components that needs higher bandwidth connections, such as memory subsystem 1320 or graphics interface components 1340, or accelerators 1342. Interface 1312 represents an interface circuit, which can be a standalone component or integrated onto a processor die. Where present, graphics interface 1340 interfaces to graphics components for providing a visual display to a user of system 1300. In one example, graphics interface 1340 can drive a display that provides an output to a user. In one example, the display can include a touchscreen display. In one example, graphics interface 1340 generates a display based on data stored in memory 1330 or based on operations executed by processor 1310 or both. In one example, graphics interface 1340 generates a display based on data stored in memory 1330 or based on operations executed by processor 1310 or both.

Accelerators 1342 can be a programmable or fixed function offload engine that can be accessed or used by a processor 1310. For example, an accelerator among accelerators 1342 can provide data compression (DC) capability, cryptography services such as public key encryption (PKE), cipher, hash/authentication capabilities, decryption, or other capabilities or services. In some cases, accelerators 1342 can be integrated into a CPU socket (e.g., a connector to a motherboard or circuit board that includes a CPU and provides an electrical interface with the CPU). For example, accelerators 1342 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 1342 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations. Example accelerators 1342 include GPUs, TPUs, and Amazon Web Services Trainium.

Memory subsystem 1320 represents the main memory of system 1300 and provides storage for code to be executed by processor 1310, or data values to be used in executing a routine. Memory subsystem 1320 can include one or more memory devices 1330 such as read-only memory (ROM), flash memory, one or more varieties of random access memory (RAM) such as DRAM, or other memory devices, or a combination of such devices. Memory 1330 stores and hosts, among other things, operating system (OS) 1332 to provide a software platform for execution of instructions in system 1300. Additionally, applications 1334 can execute on the software platform of OS 1332 from memory 1330. Applications 1334 represent programs that have their own operational logic to perform execution of one or more functions. Processes 1336 represent agents or routines that provide auxiliary functions to OS 1332 or one or more applications 1334 or a combination. OS 1332, applications 1334, and processes 1336 provide software logic to provide functions for system 1300. In one example, memory subsystem 1320 includes memory controller 1322, which is a memory controller to generate and issue commands to memory 1330. It will be understood that memory controller 1322 could be a physical part of processor 1310 or a physical part of interface 1312. For example, memory controller 1322 can be an integrated memory controller, integrated onto a circuit with processor 1310.

Applications 1334 and/or processes 1336 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 1332 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others.

While not specifically illustrated, it will be understood that system 1300 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 1300 includes interface 1314, which can be coupled to interface 1312. In one example, interface 1314 represents an interface circuit, which can include standalone components and integrated circuitry. In one example, multiple user interface components or peripheral components, or both, couple to interface 1314. Network interface 1350 provides system 1300 the ability to communicate with remote devices (e.g., servers or other computing devices) over one or more networks. Network interface 1350 can include an Ethernet adapter, wireless interconnection components, cellular network interconnection components, USB (universal serial bus), or other wired or wireless standards-based or proprietary interfaces. Network interface 1350 can transmit data to a device that is in the same data center or rack or a remote device, which can include sending data stored in memory. Network interface 1350 can receive data from a remote device, which can include storing received data into memory. In some examples, packet processing device or network interface device 1350 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described with respect to FIG. 12.

In one example, system 1300 includes one or more input/output (I/O) interface(s) 1360. I/O interface 1360 can include one or more interface components through which a user interacts with system 1300. Peripheral interface 1370 can include any hardware interface not specifically mentioned above. Peripherals refer generally to devices that connect dependently to system 1300.

In one example, system 1300 includes storage subsystem 1380 to store data in a nonvolatile manner. In one example, in certain system implementations, at least certain components of storage 1380 can overlap with components of memory subsystem 1320. Storage subsystem 1380 includes storage device(s) 1384, which can be or include any conventional medium for storing large amounts of data in a nonvolatile manner, such as one or more magnetic, solid state, or optical based disks, or a combination. Storage 1384 holds code or instructions and data 1386 in a persistent state (e.g., the value is retained despite interruption of power to system 1300). Storage 1384 can be generically considered to be a "memory," although memory 1330 is typically the executing or operating memory to provide instructions to processor 1310. Whereas storage 1384 is nonvolatile, memory 1330 can include volatile memory (e.g., the value or state of the data is indeterminate if power is interrupted to system 1300). In one example, storage subsystem 1380 includes controller 1382 to interface with storage 1384. In one example controller 1382 is a physical part of interface 1314 or processor 1310 or can include circuits or logic in both processor 1310 and interface 1314.

A volatile memory is memory whose state (and therefore the data stored in it) is indeterminate if power is interrupted to the device. A non-volatile memory (NVM) device is a memory whose state is determinate even if power is interrupted to the device.

In an example, system 1300 can be implemented using interconnected compute sleds of processors, memories, storages, network interfaces, and other components. High speed interconnects can be based on: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 1300 can be implemented using interconnected compute sleds of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples, and includes an apparatus that includes: an interface and circuitry coupled to the interface, the circuitry configured to execute instructions that cause the circuitry to perform floating point (FP) operations based on floating point data received in different packets, wherein an order of the floating point operations is based on a reorder of the data received in the different packets and wherein the reorder of the data received in the different packets is different than the order in which the packets were received.

Example 2 includes one or more examples, wherein the perform FP operations based on floating point data received in different packets comprises: based on receipt of packets that comprise FP data for an FP operation to generate a reproducible result, order the FP data, wherein the FP operation comprises computation of results from a first FP operation and a second FP operation, based on available ordered FP data from the first FP operation, perform the first FP operation on the available ordered FP data from the first FP operation to generate a first result and store the first result, based on available reordered FP data from the second FP operation, perform the second FP operation on the available ordered FP data from the second FP operation to generate a second result and store the second result, and based on availability of the first and second stored results, perform the FP operation.

Example 3 includes one or more examples, wherein the received packets comprise received packets from senders associated with source Internet Protocol (IP) addresses and wherein the reorder the FP data comprises store received FP data into buffers associated with particular source IP addresses.

Example 4 includes one or more examples, wherein the first FP operation comprises one or more of: sum, subtract, min, max, divide, or multiply, the second FP operation comprises one or more of: sum, subtract, min, max, divide, or multiply, and the FP operation comprises one or more of: sum, subtract, min, max, divide, or multiply.

Example 5 includes one or more examples, wherein a first instruction of the instructions comprises storage of a first packet FP data based on non-receipt of a second packet FP data that is to be added to the first packet FP data.

Example 6 includes one or more examples, wherein a second instruction of the instructions comprises: based on receipt of a second packet with second packet FP data, retrieve a first packet FP data from a region of memory, add the second packet FP data to the first packet FP data to generate an FP sum, and store the FP sum into the region of memory that stored the first packet FP data.

Example 7 includes one or more examples, wherein a third instruction of the instructions comprises performance of summation of packet FP data stored in memory based on detection of an idle state of a processor.

Example 8 includes one or more examples, and includes a non-transitory computer-readable medium comprising instructions stored thereon, that if executed by one or more processors, cause the non-transitory computer-readable medium to: configure a network interface device to: perform floating point (FP) operations based on floating point data received in different packets, wherein an order of the floating point operations is based on a reorder of the data received in the different packets and wherein the reorder of the data received in the different packets is different than the order in which the packets were received.

Example 9 includes one or more examples, wherein the perform FP operations based on floating point data received in different packets comprise: based on receipt of packets that comprise FP data for an FP operation to generate a reproducible result, order the FP data, wherein the FP operation comprises computation of results from a first FP operation and a second FP operation, based on available ordered FP data from the first FP operation, perform the first FP operation on the available ordered FP data from the first FP operation to generate a first result and store the first result, based on available ordered FP data from the second FP operation, perform the second FP operation on the available ordered FP data from the second FP operation to generate a second result and store the second result, and based on availability of the first and second stored results, perform the FP operation.

Example 10 includes one or more examples, wherein the received packets comprise received packets from senders associated with source Internet Protocol (IP) addresses and wherein the reorder the FP data comprises store received FP data into buffers associated with particular source IP addresses.

Example 11 includes one or more examples, wherein the first FP operation comprises one or more of: sum, subtract, min, max, or multiply, the second FP operation comprises one or more of: sum, subtract, min, max, or multiply, and the FP operation comprises one or more of: sum, subtract, min, max, or multiply.

Example 12 includes one or more examples, wherein a first instruction of the instructions comprises storage of a first packet FP data based on non-receipt of a second packet FP data that is to be added to the first packet FP data.

Example 13 includes one or more examples, wherein a second instruction of the instructions comprises: based on receipt of a second packet with second packet FP data, retrieve a first packet FP data from a region of memory, add the second packet FP data to the first packet FP data to generate an FP sum, and store the FP sum into the region of memory that stored the first packet FP data.

Example 14 includes one or more examples, wherein a third instruction of the instructions comprises performance of an operation on packet FP data stored in memory based on detection of an idle state of a processor.

Example 15 includes one or more examples, and includes a method that includes: a network interface device performing: floating point (FP) operations based on floating point data received in different packets, wherein an order of the floating point operations is based on a reorder of the data received in the different packets and wherein the reorder of the data received in the different packets is different than the order in which the packets were received.

Example 16 includes one or more examples, wherein the FP operations based on floating point data received in different packets comprise: based on receipt of packets that comprise FP data for an FP operation to generate a reproducible result, order the FP data, wherein the FP operation comprises computation of results from a first FP operation and a second FP operation, based on available ordered FP data from the first FP operation, perform the first FP operation on the available ordered FP data from the first FP operation to generate a first result and store the first result, based on available reordered FP data from the second FP operation, perform the second FP operation on the available ordered FP data from the second FP operation to generate a second result and store the second result, and based on availability of the first and second stored results, perform the FP operation.

Example 17 includes one or more examples, wherein the received packets comprise received packets from senders associated with source Internet Protocol (IP) addresses and wherein the reorder the FP data comprises store received FP data into buffers associated with particular source IP addresses.

Example 18 includes one or more examples, wherein the first FP operation comprises one or more of: sum, subtract, min, max, or multiply, the second FP operation comprises one or more of: sum, subtract, min, max, or multiply, and the FP operation comprises one or more of: sum, subtract, min, max, or multiply.

Example 19 includes one or more examples, wherein a first instruction of the instructions comprises storage of a first packet FP data based on non-receipt of a second packet FP data that is to be added to the first packet FP data and a second instruction of the instructions comprises: based on receipt of a second packet with second packet FP data, retrieve a first packet FP data from a region of memory, add the second packet FP data to the first packet FP data to generate an FP sum, and store the FP sum into the region of memory that stored the first packet FP data.

Example 20 includes one or more examples, wherein a third instruction of the instructions comprises performance of an operation on packet FP data stored in memory based on detection of an idle state of a processor.

## Claims

1. An apparatus comprising:
an interface and
circuitry coupled to the interface, the circuitry configured to execute instructions that cause the circuitry to:
perform floating point (FP) operations based on floating point data received in different packets, wherein an order of the floating point operations is based on a reorder of the data received in the different packets and wherein the reorder of the data received in the different packets is different than the order in which the packets were received.

2. The apparatus of claim 1, wherein the received packets comprise received packets from senders associated with source Internet Protocol (IP) addresses and wherein the reorder the FP data comprises store received FP data into buffers associated with particular source IP addresses.

3. The apparatus of claim 1, wherein a first instruction of the instructions comprises storage of a first packet FP data based on non-receipt of a second packet FP data that is to be added to the first packet FP data.

4. The apparatus of claim 1, wherein a second instruction of the instructions comprises: based on receipt of a second packet with second packet FP data, retrieve a first packet FP data from a region of memory, add the second packet FP data to the first packet FP data to generate an FP sum, and store the FP sum into the region of memory that stored the first packet FP data.

5. The apparatus of claim 1, wherein a third instruction of the instructions comprises performance of summation of packet FP data stored in memory based on detection of an idle state of a processor.

6. The apparatus of any of claims 1-5, wherein the perform FP operations based on floating point data received in different packets comprises:
based on receipt of packets that comprise FP data for an FP operation to generate a reproducible result, order the FP data, wherein the FP operation comprises computation of results from a first FP operation and a second FP operation,
based on available ordered FP data from the first FP operation, perform the first FP operation on the available ordered FP data from the first FP operation to generate a first result and store the first result,
based on available reordered FP data from the second FP operation, perform the second FP operation on the available ordered FP data from the second FP operation to generate a second result and store the second result, and
based on availability of the first and second stored results, perform the FP operations.

7. The apparatus of claim 6, wherein
the first FP operation comprises one or more of: sum, subtract, min, max, divide, or multiply and
the second FP operation comprises one or more of: sum, subtract, min, max, divide, or multiply, and
the FP operations comprise one or more of: sum, subtract, min, max, divide, or multiply.

8. The apparatus of claim 1, comprising a switch system on chip (SoC), wherein the switch SoC includes the interface and the circuitry.

9. A method comprising:
a network interface device performing:
floating point (FP) operations based on floating point data received in different packets, wherein an order of the floating point operations is based on a reorder of the data received in the different packets and wherein the reorder of the data received in the different packets is different than the order in which the packets were received.

10. The method of claim 9, wherein the received packets comprise received packets from senders associated with source Internet Protocol (IP) addresses and wherein the reorder the FP data comprises store received FP data into buffers associated with particular source IP addresses.

11. The method of claim 9, wherein
a first instruction of the instructions comprises storage of a first packet FP data based on non-receipt of a second packet FP data that is to be added to the first packet FP data and
a second instruction of the instructions comprises: based on receipt of a second packet with second packet FP data, retrieve a first packet FP data from a region of memory, add the second packet FP data to the first packet FP data to generate an FP sum, and store the FP sum into the region of memory that stored the first packet FP data.

12. The method of claim 9, wherein a third instruction of the instructions comprises performance of an operation on packet FP data stored in memory based on detection of an idle state of a processor.

13. The method of any of claims 9-12, wherein the FP operations based on floating point data received in different packets comprise:
based on receipt of packets that comprise FP data for an FP operation to generate a reproducible result, order the FP data, wherein the FP operation comprises computation of results from a first FP operation and a second FP operation,
based on available ordered FP data from the first FP operation, perform the first FP operation on the available ordered FP data from the first FP operation to generate a first result and store the first result,
based on available reordered FP data from the second FP operation, perform the second FP operation on the available ordered FP data from the second FP operation to generate a second result and store the second result, and
based on availability of the first and second stored results, perform the FP operations.

14. The method of claim 13, wherein
the first FP operation comprises one or more of: sum, subtract, min, max, or multiply,
the second FP operation comprises one or more of: sum, subtract, min, max, or multiply, and
the FP operations comprise one or more of: sum, subtract, min, max, or multiply.

15. A computer-readable medium comprising instructions that if executed, by one or more processors, implement a method or realise an apparatus as claimed in any preceding claim.
